# EUROPÄISCHE PATENTSCHRIFT

(11) **EP 4 279 833 B1**
(45) Veröffentlichungstag und Bekanntmachung des Hinweises auf die Patenterteilung: **02.07.2025**
(21) Anmeldenummer: 23172886.6
(22) Anmeldetag: 11.05.2023
(51) Int. Cl.: F24H 1/00, F24H 1/10, F24H 1/14, F24H 9/1818, B60H 1/22, B60K 1/00

(54) **ROHRHEIZUNG**
TUBE HEATING
CHAUFFAGE DE TUYAUX

(30) Priorität: 19.05.2022 DE 102022112548
(43) Veröffentlichungstag der Anmeldung: 22.11.2023
(73) Patentinhaber: Eberspächer catem GmbH & Co. KG, 76863 Herxheim (DE)
(72) Erfinder: NIEDERER, Michael, 76889 Kapellen-Drusweiler (DE); WALZ, Kurt, 76767 Hagenbach (DE)
(74) Vertreter: Grünecker Patent- und Rechtsanwälte PartG mbB

(56) Entgegenhaltungen:
- EP-A1- 3 650 778
- DE-A1- 2 948 591
- DE-U1- 202010 010 779

## Beschreibung

Die vorliegende Erfindung betrifft eine Rohrheizung für die Erwärmung eines Medium führenden Rohres mit den oberbegrifflichen Merkmalen von Anspruch 1. Eine solche Rohrheizung ist aus DE 29 48 591 A1 bekannt.

Die vorliegende Erfindung betrifft insbesondere eine Rohrheizung zur Verwendung in einem Kraftfahrzeug. Die vorliegende Erfindung will eine Heizung angeben, die kompakt ausgebildet ist, sich möglichst eng an die Umfangsfläche des Rohres anschmiegt und bevorzugt ohne Einsatz von Werkzeugen montierbar und auch erweiterbar ist. Die Rohrheizung soll skalierbar und leicht an unterschiedliche Rohrdurchmesser anpassbar sein. Anpassbar sein soll auch die Heizleistung der Rohrheizung. Darüber hinaus soll die Rohrheizung eine gute elektrische Sicherheit bereitstellen. Die Rohrheizung soll so ausgebildet sein, dass eine Überhitzung bzw. ein Durchbrennen der Rohrheizung bestmöglich vermieden wird.

Im Hinblick auf diese Anforderungen wird mit der vorliegenden Erfindung eine Rohrheizung mit den Merkmalen von Anspruch 1 angegeben. Die Rohrheizung hat eine PTC-Heizeinrichtung. Diese PTC-Heizeinrichtung hat zumindest ein PTC-Element sowie Leiterbahnen, die zur Bestromung des zumindest einen PTC-Elementes mit unterschiedlicher Polarität angepasst ausgebildet sind. Die Leiterbahnen werden bevorzugt aus Blechstreifen gebildet.

Die PTC-Heizeinrichtung kann außenseitig zumindest eine Isolierung aufweisen, so dass die PTC-Heizeinrichtung ein- oder beidseitig gegebenenfalls vollumfänglich von der Isolierung umgeben ist. Damit kann die Rohrheizung potentialfrei betrieben werden. Bei einem potentialfreien Betrieb sind die außerhalb der PTC-Heizeinrichtung befindlichen Komponenten der Rohrheizung nicht elektrisch mit den beiden Leiterbahnen der PTC-Heizeinrichtung verbunden. Eine solche elektrische Verbindung kann durchaus möglich sein, wenn die Rohrheizung in einem Kraftfahrzeug mit der Betriebsspannung der Hilfsaggregate betrieben wird, d.h. mit 12 bzw. 24 Volt. Ein potentialfreier Betrieb ist aber insbesondere erwünscht für den Betrieb der Rohrheizung in einem elektrisch angetriebenen Fahrzeug. Die Rohrheizung kann hier mit dem Leistungsstrom betrieben werden, der auch den Vortrieb des Elektrofahrzeuges antreibt. Insbesondere kann die Rohrheizung in einem mittels Brennstoffzelle betriebenen Fahrzeug eingebaut sein, um in dem Fahrzeug zu transportierendes Wasser, insbesondere demineralisiertes Wasser aufzutauen bzw. gegen Einfrieren zu schützen.

Die erfindungsgemäße Rohrheizung hat ein Wärmeübertragungselement, das eine flächig an das Rohr, respektive die Außenumfangsfläche des Rohres, anlegbare, konvexe Innenfläche und gegenüberliegend dazu eine dem PTC-Element unterlegte Anlagefläche ausbildet. Das Wärmeübertragungselement besteht üblicherweise aus einem Werkstoff mit guter Wärmeleitfähigkeit, wie beispielsweise Kupfer oder Aluminium. Die Anlagefläche ist zumindest abschnittsweise gradlinig verlaufen. Dabei lässt sich die Erfindung von der Vorstellung leiten, dass das PTC-Element der PTC-Heizeinrichtung üblicherweise ein quaderförmiges Keramikbauteil ist, welches auf gegenüberliegenden Hauptseitenflächen mit einer Metallisierung versehen ist. Über diese Hauptseitenflächen liegt das PTC-Element wärmeleitend, ggf. auch elektrisch leitend an dem Wärmeübertragungselement an. Das Wärmeübertragungselement kann auch eine der Leiterbahnen ausbilden. Bevorzugt liegt das PTC-Element unmittelbar elektrisch leitend an einer gesonderten Leiterbahn an. Die Leiterbahn erstreckt sich üblicherweise parallel zu der zugeordneten Anlagefläche des Wärmeübertragungselements.

Im Hinblick auf einen potentialfreien Betrieb befindet sich bevorzugt zwischen dem Wärmeübertragungselement und der PTC-Heizeinrichtung, d.h. zwischen der rohrseitigen Leiterbahn der PTC-Heizeinrichtung und dem Wärmeübertragungselement ein elektrisches Isolierelement. Dieses elektrische Isolierelement kann beispielsweise durch eine Kunststofffolie, insbesondere eine hochwarmfeste Kunststofffolie, wie beispielsweise eine Kapton-Folie gebildet sein.

Gegenüberliegend zu dem Wärmeübertragungselement befindet sich bei der erfindungsgemäßen Rohrheizung ein Gehäusevorspannelement. Dieses Gehäusevorspannelement bildet üblicherweise die teilumfängliche äußere Umhüllung der Rohrheizung. Zusammen mit einem Gehäusegegenelement umgreift das Gehäusevorspannelement üblicherweise die PTC-Heizeinrichtung, das Wärmeübertragungselement sowie das Rohr. Dabei liegt das Gehäusegegenelement üblicherweise unmittelbar gegen eine Teilumfangsfläche des Rohres an, wohingegen das Gehäusevorspannelement das Rohr zumindest teilumfänglich umgibt und in diesem teilumfänglichen Abschnitt auch die PTC-Heizeinrichtung umschließt.

Dabei wird die PTC-Heizeinrichtung unter Vorspannung gegen die Außenumfangsfläche des Rohres angelegt. Diese Vorspannung dient nicht nur der guten Wärmeübertragung der einzelnen Schichten der Rohrheizung. Die einzelnen Schichten sind üblicherweise lediglich übereinander gelegt, nicht notwendigerweise, jedoch möglicherweise unmittelbar miteinander verbunden, beispielsweise verklebt, verlötet oder verschweißt bzw. verschraubt. Allein eine radial wirkende Vorspannung legt die einzelnen Schichten der Rohrheizung gegeneinander an, so dass eine gute Wärmeübertragung von dem zumindest einen PTC-Element auf die Außenumfangsfläche des Rohres geschaffen wird. In entsprechender Weise ergibt sich auch eine vorteilhafte Einleitung des Leistungsstromes in das PTC-Element. Die Leiterbahnen schließen üblicherweise das PTC-Element in radialer Richtung zwischen sich ein. So hat die Rohrheizung üblicherweise eine radial innenliegende Leiterbahn, die näher an dem Rohr angeordnet ist als eine radial außenliegende Leiterbahn. Das zumindest eine PTC-Element ist zwischen diesen beiden Leiterbahnen radial eingespannt und liegt üblicherweise unter Vorspannung elektrisch leitend an diesen Leiterbahnen an.

Auch im Hinblick auf Verspannung der einzelnen Schichten der Rohrheizung wird gemäß einer bevorzugten Weiterbildung der vorliegenden Erfindung ein Druckübertragungselement aus einem elektrisch isolierenden Werkstoff vorgeschlagen, das zwischen dem Gehäusevorspannelement und der PTC-Heizeinrichtung vorgesehen ist. Dieses Druckübertragungselement isoliert die PTC-Heizeinrichtung radial außen. Gegenüber dem radial innen vorgesehenen elektrischen Isolierelement, welches zwischen der PTC-Heizeinrichtung und der Außenumfangsfläche des Rohres vorgesehen ist und im Hinblick auf eine gute Wärmedurchleitung in Richtung auf das Rohr möglichst dünnwandig und nach Art einer Folie ausgebildet sein sollte, kann das Druckübertragungselement als Teil des äußeren Gehäuses beispielsweise auch als starres Kunststoffgehäuseteil ausgebildet sein und so die PTC-Heizeinrichtung außenseitig abdecken und schützen. Darüber hinaus kann das Druckübertragungselement auch eine eher punktuell von außen aufgebrauchte Vorspannkraft aufnehmen und nach innen weiterleiten. Eine solche Vorspannkraft kann beispielsweise durch einen oder mehrere Federvorsprünge erzeugt werden, die an dem Gehäusevorspannelement vorgesehen sind. Das Druckübertragungselement kann beispielsweise aus einem technischen Kunststoff mit hoher Durchschlagsfestigkeit gebildet sein. Das Druckübertragungselement kann beispielsweise aus einem Polyamid, beispielsweise PA66, gebildet sein.

Im Hinblick auf eine bestmögliche Anpassung der Rohrheizung an die zu erzeugende und an das Rohr zu übertragende Wärmemenge wird gemäß einer bevorzugten Weiterbildung der vorliegenden Erfindung vorgeschlagen, dass die PTC-Heizeinrichtung mehrere PTC-Elemente aufweist. Diese erstrecken sich jeweils in Längsrichtung des Rohres und sind üblicherweise als ebene quaderförmige Bauteile ausgeformt. Die mehreren PTC-Elemente sind dabei bevorzugt um den Umfang des Rohres verteilt vorgesehen. So erstrecken sich einzelne der PTC-Elemente schräg zueinander und sind in Umfangsrichtung des Rohres relativ zueinander beabstandet.

Zur bestmöglichen Versorgung einer solchen Weiterbildung mit dem Leistungsstrom wird gemäß einer bevorzugten Weiterbildung der vorliegenden Erfindung vorgeschlagen, zumindest eine der Leiterbahnen, bevorzugt beide Leiterbahnen durch jeweils ein Kontaktblech auszubilden. Das entsprechende Kontaktblech hat abschnittsweise gradlinig verlaufende Kontaktflächen für die Anlage zumindest eines der PTC-Elemente. Unterschiedliche Kontaktflächen sind jeweils schräg zueinander vorgesehen. In einer Querschnittsansicht des Rohres ergeben sich dementsprechend polygonal zueinander vorgesehene Kontaktflächen, die über Biegebereiche miteinander verbunden sind. Die Biegebereiche des Kontaktblechs können durch Stanzen so bearbeitet sein, dass die Biegbarkeit des Bleches im Bereich der Biegeabschnitte verbessert wird. So kann Material aus den Biegebereichen teilweise durch Stanzen entfernt sein. Die Biegebereiche haben bevorzugt eine entlang der Biegelinie vorgesehene Perforation.

Durch zwei solcher Kontaktflächen ergeben sich abschnittsweise parallel zueinander vorgesehene Anlageflächen, die jeweils unterschiedlicher Polarität zugewiesen sind und zwischen sich zumindest eines der PTC-Elemente aufnehmen und dieses bestromen. Es versteht sich, dass zwischen den beiden Kontaktflächen unterschiedlicher Polarität auch mehrere PTC-Elemente vorgesehen sein können.

Die erfindungsgemäße Rohrheizung lässt sich dabei von der Überlegung leiten, dass lediglich ein Heizkreis vorgesehen ist, d.h. sämtliche PTC-Elemente der Rohrheizung über lediglich zwei Leiterbahnen, insbesondere in Form von Kontaktblechen bestromt werden.

Es versteht sich, dass eine solche Rohrheizung skalierbar ist. So kann die Rohrheizung im Grunde beliebig in Längsrichtung des Rohres verlängert werden. In dieser Längsrichtung kann eine Vielzahl von PTC-Elementen hintereinander vorgesehen sein. In Umfangsrichtung können mehrere Kontaktflächen beabstandet zueinander vorgesehen sein und ein Polygon mit drei, vier oder mehr im Querschnitt gradlinig verlaufenden Kontaktflächen versehen sein.

Im Hinblick auf eine angemessene Positionierung, insbesondere bei einer Vielzahl von PTC-Elementen, ist ein Positionierrahmen vorgesehen, der eine, bevorzugt mehrere Aufnahmen für das zumindest eine PTC-Element ausbildet und - wie das entsprechende PTC-Element - zwischen einander gegenüberliegenden Leiterbahnen vorgesehen ist. Dabei versteht es sich, dass die durch den Positionsrahmen gebildete Aufnahme eine geringere Höhe als das darin aufgenommene PTC-Element hat, so dass sichergestellt ist, dass die Leiterbahnen flächig gegen das PTC-Element und nicht notwendig gegen die Ränder der Aufnahme anliegen. Bevorzugt ist der Positionierrahmen zur formschlüssigen Aufnahme der Kontaktfläche angepasst ausgebildet. Die formschlüssige Aufnahme der Kontaktbleche ist jedenfalls derart, dass die Kontaktbleche in Längsrichtung des Rohres an dem Positionsrahmen unverschieblich geführt sind. Da die Kontaktbleche das Rohr teilumfänglich nach Art eines Polygons umgeben und die gradlinig verlaufenden Kontaktflächen mit entsprechenden Gegenflächen zusammenwirken und daran anliegen, die ebenfalls bevorzugt durch den Positionsrahmen ausgebildet sind, ergibt sich auch eine formschlüssige Festlegung der Kontaktbleche in Umfangsrichtung. Die Klemmung der Kontaktbleche durch Vorspannung innerhalb der Rohrheizung tut ein Weiteres für die Festlegung der Leiterbahnen. Der Positionierrahmen ist üblicherweise mit einer Poka-Yoke-Funktion verwirklicht. Ein Querschnitt auf mittlerer Länge des Positionierrahmens stellt dementsprechend eine Symmetrieebene dar. Die einzelnen Bauteile der Rohrheizung können dementsprechend üblicherweise um eine Achse, die sich rechtwinklig zu der Längsachse des Rohres erstreckt, um 180° verdreht montiert werden. Dies gilt bevorzugt für jedwedes Bauteil der elektrischen Heizvorrichtung, die um das Rohr gelegt ist.

Dies gilt auch für die nachstehend diskutierte Weiterbildung der Kontaktbleche, die in an sich bekannter Weise Kontaktfahnen zur Steckkontaktierung der PTC-Heizeinrichtung aufweisen können. Diese Kontaktfahnen dienen der Steckkontaktierung üblicherweise an ein Anschlusskabel. Die Anschlussfahnen ragen üblicherweise in Längsrichtung des Rohres und damit stirnseitig von einem bzw. beiden Kontaktblechen ab. Die Kontaktfahnen sind üblicherweise durch Stanzen und Biegen aus dem das Kontaktblech bildenden Material gebildet. Dabei sind die Kontaktfahnen üblicherweise radial gegenüber der Außenumfangsfläche des Rohres beabstandet, um insbesondere einen hinreichenden Abstand zu der Außenumfangsfläche des Rohres für die Steckkontaktierung zu schaffen. Der Positionierrahmen kann dabei zusätzlich Abstandsmittel ausbilden, durch welche die Kontaktfahnen und/oder die Kontaktbleche zusätzlich voneinander beabstandet sind und durch welche die Luft- und Kriechstrecke zwischen den Leiterbahnen unterschiedlicher Polarität erhöht wird.

Der Positionierrahmen kann auch Stütz- oder Anlageflächen zur Positionierung und/oder Halterung der Kontaktfahnen bereitstellen, so dass diese lagegenau relativ zu dem Positionierrahmen gehalten und/oder beim Steckkontaktieren mit einem weiblichen Steckkontaktelement widergelagert werden, so dass eine plastische Verformung der durch Biegen gebildeten Kontaktfahnen bei der Steckkontaktierung vermieden wird. Entsprechende Anlageflächen können auch die Kontaktbleche unterschiedlicher Polarität relativ zueinander an dem Positionierrahmen positionieren, um die notwendige Kriech- bzw. Luftstrecke vorzugeben.

Im Hinblick auf eine Verspannung der Rohrheizung wird gemäß einer bevorzugten Weiterbildung und im Hinblick auf eine leichte Herstellung derselben vorgeschlagen, das Gehäusevorspannelement durch ein Blechelement auszubilden, das durch Stanzen und Biegen einteilig angeformte Federvorsprünge aufweist. Diese Federvorsprünge sind unter Vorspannung gegen das Druckübertragungselement angelegt und bewirken eine innere Verspannung der einzelnen Schichten der Rohrheizung. Das Gehäusevorspannelement und das Gehäusegegenelement sind dabei bevorzugt jeweils durch ein Blechelement gebildet. Diese beiden Blechelemente bilden bevorzugt eine äußere Umhüllung der Rohrheizung. Die Blechelemente bauen lediglich geringfügig in der Höhe d.h. radial auf und lassen sich kostengünstig herstellen. Die entsprechenden Blechelemente haben bevorzugt einteilig daran angeformte Verriegelungssegmente. Sowohl das Gehäusevorspannelement als auch das Gehäusegegenelement haben entsprechende Verriegelungssegmente, über welche das Gehäusevorspannelement und das Gehäusegegenelement formschlüssig gegeneinander angelegt sind. Die Verriegelungssegmente sind dabei so ausgebildet, dass sich die beiden Gehäuseelemente werkzeugfrei fügen lassen. So können die beiden Gehäuseelemente durch Verrasten unter Aufbringung der inneren Vorspannung miteinander verbunden werden. Die Verrastung lässt sich üblicherweise manuell erzeugen, und so lässt sich auch die Vorspannung innerhalb der Rohrheizung manuell bewirken.

Weitere Einzelheiten und Vorteile der Erfindung ergeben sich aus der nachfolgenden Beschreibung eines Ausführungsbeispiels in Verbindung mit der Zeichnung. In dieser zeigen:
Fig. 1 eine Explosionsdarstellung des Ausführungsbeispiels und
Fig. 2 das Ausführungsbeispiel im zusammengebauten Zustand.

In der Zeichnung kennzeichnet Bezugszeichen 2 eine Rohrheizung, die eine mit Bezugszeichen 4 gekennzeichnete PTC-Heizeinrichtung umfasst. Die PTC-Heizeinrichtung 4 hat vorliegend drei quaderförmige PTC-Elemente 6. Jedes der PTC-Elemente 6 besteht aus einem gesinterten Keramikbauteil, welches an gegenüberliegenden Hauptseitenflächen mit einer Metallisierung versehen ist. Die Hauptseitenflächen sind dabei diejenigen Flächen des PTC-Elementes 6, die parallel zueinander verlaufen und jeweils die größte flächenmäßige Erstreckung aller sechs Flächen des quaderförmigen PTC-Elementes 6 haben.

Die PTC-Heizeinrichtung 4 hat ferner Leiterbahnen, vorliegend in Form von Kontaktblechen 8 bzw. 10. Mit Bezugszeichen 8 ist das radial innenliegende Kontaktblech gekennzeichnet; mit Bezugszeichen 10 das radial außenliegende Kontaktblech. Jedes der Kontaktbleche 8, 10 bildet jeweils drei gradlinig verlaufende Kontaktflächen 12 aus. Die Kontaktflächen 12 der jeweiligen Kontaktbleche 8, 10 sind einander gegenüberliegend vorgesehen. Jedes der drei PTC-Elemente liegt an den gegenüberliegenden Kontaktflächen 12 der jeweiligen Kontaktbleche 8, 10 unmittelbar an. Die PTC-Heizeinrichtung 4 des gezeigten Ausführungsbeispiels hat ferner einen Positionierrahmen 14, der vorliegend drei Aufnahmen 16 ausbildet. In jeder der Aufnahmen 16 ist eines der PTC-Elemente 6 aufgenommen. Die Aufnahmen 16 haben eine geringere Höhe als die PTC-Elemente. Die Kontaktbleche 8, 10 überragen die Hauptseitenflächen der PTC-Elemente 6. Mit anderen Worten haben die Kontaktflächen 12 jeweils eine flächenmäßige Erstreckung, die größer als diejenige Erstreckung der Hauptseitenflächen des zugeordneten PTC-Elementes ist. Die PTC-Elemente 6 sind vorliegend identisch ausgebildet. Entsprechend sind auch die Aufnahmen 14 identisch dimensioniert. Der Positionierrahmen 14 hat stirnseitige Ränder, die die Begrenzungsflächen zu den Aufnahmen 16 beidseitig radial überragen. Entsprechendes gilt für Längsränder 20, die sich in Längsrichtung des Positionierrahmens 14 erstrecken und diesen begrenzen.

Von dem Positionierrahmen ragen radial nach außen (zu erkennen) und nach innen (nicht zu erkennen) Positionierzapfen 22 ab, die neben den zuvor beschriebenen Rändern 18, 20 der Positionierung der Kontaktbleche 8, 10 dienen.

Ersichtlich haben die Kontaktbleche 8, 10 zwischen den sich gradlinig erstreckenden Kontaktflächen 12 Biegebereiche 24, die die Kontaktflächen 12 miteinander verbinden und mit einer Perforation versehen sind. Die Perforation hat längliche Positionieraufnahmen 26, die zur Aufnahme der Positionierzapfen 22 angepasst ausgebildet sind. Durch diese Ausgestaltung können die beiden Kontaktbleche 8, 10 exakt relativ zu dem Positionierrahmen 14 im Rahmen der Montage positioniert und mit diesem gefügt werden.

Die Kontaktbleche 8, 10 liegen danach innerhalb der Ränder 18, 20, die die Kriechstrecke zwischen den Kontaktblechen 8, 10 unterschiedlicher Polarität erhöhen.

Die zuvor beschriebene PTC-Heizeinrichtung 4 ist wärmeleitend gegen ein Rohr 28 angelegt, das bei dem gezeigten Ausführungsbeispiel zylindrisch mit kreisrunder Querschnittsfläche ausgeformt ist. Von einer Anlage an eine zylindrische Rohrform geht die vorliegende Erfindung aus. Sie geht dabei insbesondere von einer Anlage an ein im Querschnitt rundes Rohr aus. Die PTC-Heizeinrichtung ist jedenfalls gegenüber dem Rohr 28 durch ein elektrisches Isolierelement 30 elektrisch isoliert. Bei dem Isolierelement 30 handelt es sich vorliegend um eine mit der Querschnittskontur des inneren Kontaktblechs 8 geformte Folie aus Kapton. Auf der gegenüberliegenden radial äußeren Seite ist ein mit Bezugszeichen 32 gekennzeichnetes Druckübertragungselement vorgesehen, welches ebenfalls aus einem elektrisch isolierenden Werkstoff besteht, vorliegend aus PA66.

Zwischen der Außenumfangsfläche des Rohres und dem Isolierelement 30 befindet sich ein Wärmeübertragungselement 34. Dieses Wärmeübertragungselement 34 ist üblicherweise formstabil und aus Metall, beispielsweise Aluminium oder Kupfer, ausgebildet. Das Wärmeübertragungselement 34 vermittelt die im Querschnitt polygonale Gestaltung der PTC-Heizeinrichtung 4 auf die Außenumfangsfläche 36 des Rohres 28. So hat das Wärmeübertragungselement 34 abschnittsweise gradlinig verlaufende Anlageflächen 38, die parallel zu der Mittellängsachse des Rohres 28 verlaufen und an dem äußeren Umfang des Wärmeübertragungselements 34 ausgebildet sind. An dem Innenumfang des Wärmeübertragungselements 34 ist vorliegend eine konvex geformte Innenfläche vorgesehen. Die konvexe Innenfläche 40 hat eine Krümmung entsprechend der Krümmung des Rohres 28. Im gefügten Zustand erstrecken sich die PTC-Elemente 6 jeweils parallel zu den ihnen zugeordneten und ihnen unterlegten Anlageflächen 38. Das innere Kontaktblech 8 und auch das Isolierelement 30 sind abschnittsweise parallel dazu vorgesehen. Entsprechendes gilt auf der gegenüberliegenden Seite für das dort vorgesehene Kontaktblech 10. Dieses stützt sich radial außen an dem Druckübertragungselement 32 ab, welches - wie das zugeordnete Kontaktblech 10 - Positionieraufnahmen 26 in Biegebereichen aufweist, die sich abschnittsweise gradlinig erstreckende Druckübertragungsflächen 42 des Druckübertragungselementes 32 verbinden.

Der hier beschriebene Aufbau wird zwischen einem mit Bezugszeichen 44 gekennzeichneten Gehäusevorspannelement, das durch Stanzen und Biegen einteilig daran ausgeformte Federvorsprünge 46 aufweist, und einem damit verbundenen Gehäusegegenelement 48 aufgenommen und unter Vorspannung gehalten. Dazu weisen das Gehäusevorspannelement 44 und das Gehäusegegenelement 48 einander zugeordnete Verriegelungssegmente auf, die durch Stanzen und Biegen der aus Blechmaterial gebildeten Gehäuseelemente 44, 48 ausgeformt sind. Die Verriegelungssegmente sind komplementär, d.h. wirken zusammen, um die beiden Gehäuseelement 44, 48 miteinander zu fügen. Es handelt sich vorliegend um Elemente einer Rastverbindung.

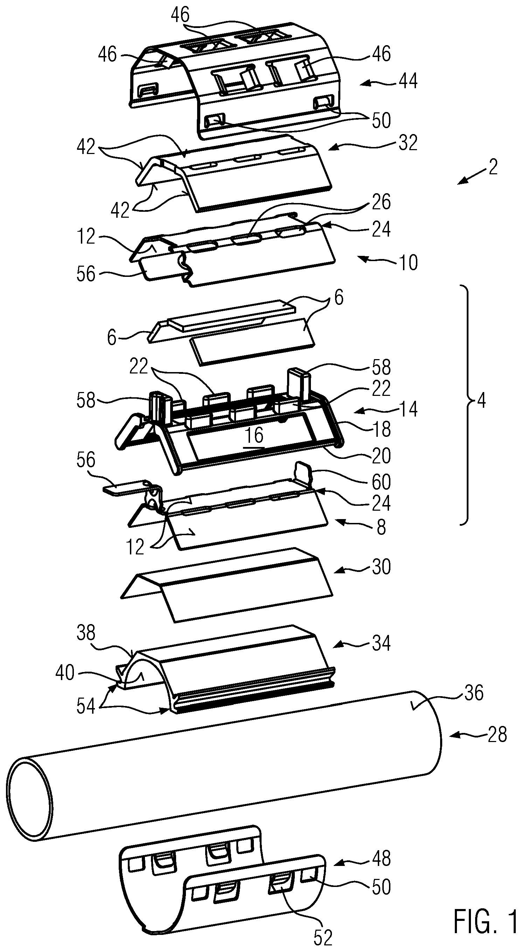

Die Fig. 1 lässt an dem Gehäusegegenelement 48 radial nach innen gebogene Montagevorsprünge erkennen, die mit Bezugszeichen 52 gekennzeichnet und derart ausgebildet sind, dass sie in Längsrichtung des Rohres 28 zu Montagezwecken in eine radial offene Montagenut 54 des Wärmeübertragungselements 34 eingebracht werden können. Eine entsprechende Montagenut 54 sowie Montagevorsprünge 52 sind auf gegenüberliegenden Seiten vorgesehen. Dadurch kann das Gehäusegegenelement 48 das Rohr 28 umgreifen und das Wärmeübertragungselement 34 gegenüber dem Rohr 28 vorpositionieren. Danach werden im Rahmen der Montage die einzelnen Schichten der PTC-Heizeinrichtung 34 und die entsprechenden Isolatoren 32, 30 über dem Rohr und dem Wärmeübertragungselement 34 montiert. Schließlich wird das Gehäusevorspannelement 44 von oben aufgesetzt, dabei die in Richtung des Rohres 38 vorspringenden Federvorsprünge 46 vorgespannt und das Gehäusevorspannelement 44 mit dem Gehäusegegenelement über die Verriegelungssegmente 50 formschlüssig verriegelt.

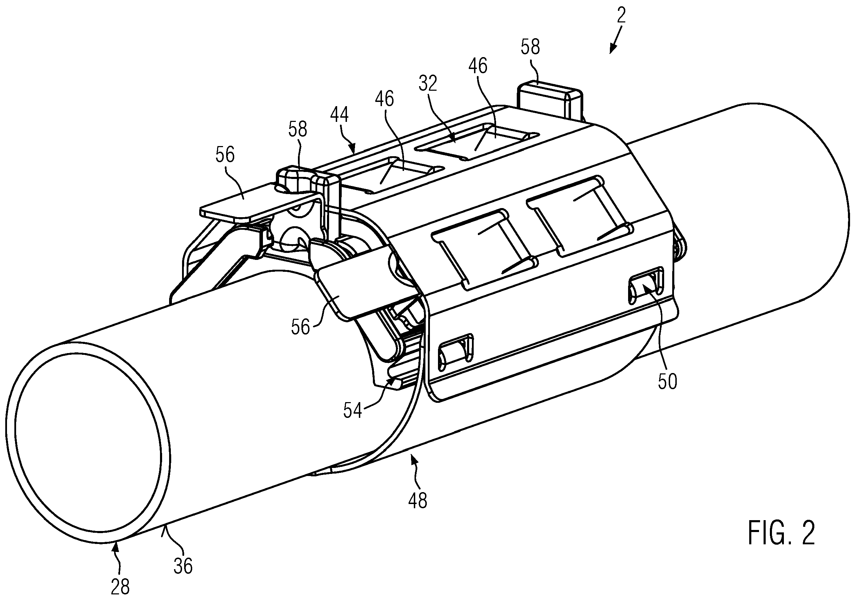

Die Figuren, insbesondere Fig. 2, die den zusammengebauten Zustand erkennen lässt, vermittelt Kontaktfahnen 56, die jeweils einteilig durch Stanzen und Biegen an den jeweiligen Kontaktblechen 8, 10 ausgebildet sind.

Fig. 2 lässt erkennen, dass diese Kontaktfahnen 56 der unterschiedlichen Kontaktbleche 8, 10 in Umfangsrichtung relativ zueinander beabstandet sind. Die Kontaktfahne 56 des inneren Kontaktblechs 8 stützt sich an einem Anlagevorsprung 58 ab, der durch den Positionierrahmen 14 gebildet ist. Wie Fig. 1 vermittelt, befindet sich auf Höhe der Kontaktfahne 56 auf der gegenüberliegenden Seite des innenliegenden Kontaktblechs 8 ein durch das Kontaktblech 8 gebildeter Verriegelungszapfen 60, der gegen den auf der gegenüberliegenden Seite vorgesehenen Anlagevorsprung 58 anliegt, so dass das Kontaktblech 8 auch insofern positioniert und gegenüber dem Positionierrahmen 14 festgelegt ist.

### Bezugszeichenliste

- 2: Rohrheizung
- 4: PTC-Heizeinrichtung
- 6: PTC-Element
- 8: radial innen liegendes Kontaktblech
- 10: radial außen liegendes Kontaktblech
- 12: Kontaktfläche
- 14: Positionierrahmen
- 16: Aufnahmen
- 18: Rand
- 20: Längsrand
- 22: Positionierzapfen
- 24: Biegebereich
- 26: Positionieraufnahmen
- 28: Rohr
- 30: Isolierelement
- 32: Druckübertragungselement
- 34: Wärmeübertragungselement
- 36: Außenumfangsfläche
- 38: Anlagefläche
- 40: Innenfläche
- 42: Druckübertragungsflächen
- 44: Gehäusevorspannelement
- 46: angeformte Federvorsprünge
- 48: Gehäusegegenelement
- 50: Verriegelungssegmente
- 52: Montagevorsprung
- 54: Montagenut
- 56: Kontaktfahnen
- 58: Anlagevorsprung
- 60: Verriegelungszapfen

## Patentansprüche

1. Rohrheizung für die Erwärmung eines Medium führenden Rohres (28), mit einer PTC-Heizeinrichtung (4) mit zumindest einem PTC-Element (6) und Leiterbahnen (8; 10), wobei das PTC-Element (6) sich in Längsrichtung des Rohres (28) erstrecken kann und zwischen den Leiterbahnen (8; 10) angeordnet ist, die unterschiedlicher Polarität zugeordnet sind, wobei ein Wärmeübertragungselement (34) vorgesehen ist, wobei ein Gehäusevorspannelement (44) und ein Gehäusegegenelement (48) vorgesehen sind, wobei das Gehäusevorspannelement (44) zusammen mit dem Gehäusegegenelement (48) die PTC-Heizeinrichtung (4) und das Rohr (28) umschließt und zur vorgespannten Halterung der PTC-Heizeinrichtung (4) gegen die Außenumfangsfläche (36) des Rohres (28) angepasst ausgebildet ist, **dadurch gekennzeichnet, dass** die PTC-Heizeinrichtung (4) zwischen dem Wärmeübertragungselement (4) und dem Gehäusevorspannelement (44) vorgesehen ist, und dass das Wärmeübertragungselement (34) eine flächig an das Rohr (28) anlegbare, konvexe Innenfläche (40) und gegenüberliegend dazu eine dem PTC-Element (6) unterlegte zumindest abschnittsweise gradlinig verlaufende Anlagefläche (38) ausbildet.

2. Rohrheizung nach Anspruch 1, **dadurch gekennzeichnet, dass** zwischen dem Gehäusevorspannelement (44) und der PTC-Heizeinrichtung (4) ein Druckübertragungselement (32) aus einem elektrisch isolierenden Werkstoff vorgesehen ist.

3. Rohrheizung nach Anspruch 1 oder 2, **dadurch gekennzeichnet, dass** zwischen dem Wärmeübertragungselemen (34) und der PTC-Heizeinrichtung (4) ein elektrisches Isolierelement (30) vorgesehen ist.

4. Rohrheizung nach einem der vorherigen Ansprüche, **dadurch gekennzeichnet, dass** mehrere PTC-Elemente (6) vorgesehen sind, die sich jeweils in Längsrichtung des Rohres (28) erstrecken und schräg zueinander angeordnet sind.

5. Rohrheizung nach Anspruch 4, **dadurch gekennzeichnet, dass** zumindest eine der Leiterbahnen durch ein Kontaktblech (8,10) gebildet ist, das zumindest abschnittsweise gradlinig verlaufende Kontaktflächen für die Anlage zumindest eines der PTC-Elemente (6) ausformt, wobei unterschiedlichen PTC-Elementen zugeordnete Kontaktflächen des Kontaktblechs schräg zueinander angeordnet sind.

6. Rohrheizung nach einem der vorherigen Ansprüche, **gekennzeichnet durch** einen Positionierrahmen (14), der eine Aufnahme (16) für das zumindest eine PTC-Element (6) ausbildet, wobei die Aufnahmen (16) zwischen einander gegenüberliegenden Leiterbahnen (8,10) vorgesehen sind.

7. Rohrheizung nach Anspruch 6, **dadurch gekennzeichnet, dass** die durch den Positionierrahmen (14) gebildeten Aufnahmen (16) eine geringere Höhe als das darin aufgenommene PTC-Element (6) haben und dass der Positionierrahmen (14) zur formschlüssigen Aufnahme der Kontaktbleche (8; 10) angepasst ausgebildet ist.

8. Rohrheizung nach einem der vorherigen Ansprüche, soweit von Anspruch 5 abhängig, **dadurch gekennzeichnet, dass** die Kontaktbleche (8; 10) Kontaktfahnen (56) zur Stecckontaktierung der PTC-Heizeinrichtung (4) aufweisen.

9. Rohrheizung nach einem der vorherigen Ansprüche, **dadurch gekennzeichnet, dass** das Gehäusevorspannelement (44) durch ein Blechelement gebildet ist, das durch Stanzen und Biegen einteilig daran angeformte Federvorsprünge (46) aufweist, die unter Vorspannung gegen das Druckübertragungselement (32) angelegt sind.

10. Rohrheizung nach einem der vorherigen Ansprüche, **dadurch gekennzeichnet, dass** das Gehäusevorspannelement (44) und das Gehäusegegenelement (48) jeweils durch ein Blechelement gebildet sind, das jeweils zumindest ein durch Stanzen und/oder Biegen einteilig daran angeformte Verriegelungssegment (50) aufweist, über welches das Gehäusevorspannelement (44) und das Gehäusegegenelement (48) formschlüssig gegeneinander festgelegt sind.

## Claims

1. A pipe heating for heating a pipe (28) carrying a medium, comprising a PTC heating device (4) which comprises at least one PTC element (6) and conductor lines (8; 10), wherein the PTC element (6) may extend in the longitudinal direction of the pipe (28) while being disposed between the conductor lines (8; 10) assigned to different polarities, wherein a heat transfer member (34) is provided, wherein a housing biasing member (44) and a housing counter member (48) are provided and wherein the housing biasing member (44) together with the housing counter member (48) encloses the PTC heating device (4) and the pipe (28) and is configured to bias the PTC heating device (4) against the outer circumferential surface (36) of the pipe (28) for retaining it thereto, **characterized in that**
the PTC heating device (4) is provided between the heat transfer member (34) and the housing biasing member (44) and **in that** the heat transfer member (34) forms a convex inner surface (40) abuttable in planar contact against the pipe (28) and an opposing abutting surface (38) underneath the PTC element (6) which extends at least in parts linearly.

2. The pipe heating according to claim 1, **characterized in that** between the housing biasing member (44) and the PTC heating device (4) a pressure transfer member (32) made of an electrically insulating material is provided.

3. The pipe heating according to claims 1 or 2, **characterized in that** between the heat transfer member (34) and the PTC heating device (4) an electrically insulating element (13) is provided.

4. The pipe heating according to anyone of the preceding claims, **characterized in that** a plurality of PTC elements (6) is provided each extending in the longitudinal direction of the pipe (28) and arranged obliquely to each other.

5. The pipe heating according to claim 4, **characterized in that** at least one of the conductor lines is formed by a contact sheet plate (8, 10) forming contact surfaces extending at least in parts linearly for abutment of at least one of the PTC elements (6), wherein the contact surfaces of the contact sheet plate assigned to different PTC elements are arranged obliquely to each other.

6. The pipe heating according to anyone of the preceding claims, **characterized by** a positioning frame (14) forming a seat (16) for the at least one PTC element (6), wherein the seats (16) are provided between opposing conductor lines (8, 10).

7. The pipe heating according to claim 6, **characterized in that** the seats (16) formed by the positioning frame (14) have a smaller height than the PTC element (6) received therein and **in that** the positioning frame (14) is configured for positively receiving the contact sheet plates (8; 10).

8. The pipe heating according to anyone of the preceding claims when dependent on claim 5, **characterized in that** the contact sheet plates (8; 10) include contact lugs (56) for plug connection with the PTC heating device (4).

9. The pipe heating according to anyone of the preceding claims, **characterized in that** the housing biasing member (44) is formed by a sheet member including spring protrusions (46) integrally formed thereon by stamping and bending and being biased to abut against the pressure transfer member (32).

10. The pipe heating according to anyone of the preceding claims, **characterized in that** the housing biasing member (44) and the housing counter member (48) are each formed by a sheet member respectively including at least one locking segment (50) integrally formed thereon by stamping and/or bending and by means of which the housing biasing member (44) and the housing counter member (48) are positively fixed to each other.

## Revendications

1. Chauffage de tube pour le chauffage d'un tube (28) transportant un fluide avec un dispositif de chauffage CTP (4) avec au moins un élément CTP (6) et des pistes conductrices (8 10), où l'élément CTP (6) peut s'étendre dans la direction longitudinale du tube (28) et est disposé entre les pistes conductrices (8 10) qui sont associées à une polarité différente, où un élément de transmission de chaleur (34) est fourni, où un élément de précontrainte de boîtier (44) et un contre-élément de boîtier (48) sont fournis, où l'élément de précontrainte de boîtier (44) entoure, conjointement avec le contre-élément de boîtier (48), le dispositif de chauffage CTP (4) et le tube (28) et est réalisé de manière adaptée pour le maintien précontraint du dispositif de chauffage PTC (4) contre la surface périphérique extérieure (36) du tube (28),
**caractérisé en ce que** le dispositif de chauffage CTP (4) est agencé entre l'élément de transmission de chaleur (4) et l'élément de précontrainte de boîtier (44), et **en ce que** l'élément de transmission de chaleur (34) forme une surface intérieure convexe (40) pouvant être appliquée à plat contre le tube (28) et, à l'opposé de celle-ci, une surface de contact (38) s'étendant de manière rectiligne au moins par sections, placée sous l'élément CTP (6).

2. Chauffage de tube selon la revendication 1, **caractérisé en ce qu'**un élément de transmission de pression (32) en un matériau électriquement isolant est agencé entre l'élément de précontrainte de boîtier (44) et le dispositif de chauffage CTP (4).

3. Chauffage de tube selon la revendication 1 ou 2, **caractérisé en ce qu'**un élément d'isolation électrique (30) est agencé entre l'élément de transmission de chaleur (34) et le dispositif de chauffage CTP (4).

4. Chauffage de tube selon l'une des revendications précédentes, **caractérisé en ce que** plusieurs éléments CTP (6) sont fournis, qui s'étendent respectivement dans la direction longitudinale du tube (28) et sont disposés de manière oblique les uns par rapport aux autres.

5. Chauffage de tube selon la revendication 4, **caractérisé en ce qu'**au moins l'une des pistes conductrices est formée par une tôle de contact (8, 10) qui forme des surfaces de contact rectilignes, au moins par sections, pour la mise en contact avec au moins l'un des éléments CTP (6), où des surfaces de contact de la plaque de contact associées à différents éléments CTP sont disposées obliquement les unes par rapport aux autres.

6. Chauffage de tube selon l'une des revendications précédentes, **caractérisé par** un cadre de positionnement (14) qui forme un logement (16) pour l'au moins un élément CTP (6), où les logements (16) sont agencés entre des pistes conductrices (8, 10) opposées l'une à l'autre.

7. Chauffage de tube selon la revendication 6, **caractérisé en ce que** les logements (16) formés par le cadre de positionnement (14) ont une hauteur inférieure à celle de l'élément CTP (6) qui y est logé et **en ce que** le cadre de positionnement (14) est conçu de manière adaptée pour recevoir les tôles de contact (8 ; 10) par complémentarité de forme.

8. Chauffage de tube selon l'une des revendications précédentes, lorsque elle est dépendante de la revendication 5, **caractérisé en ce que** les tôles de contact (8 ; 10) présentent des languettes de contact (56) pour la mise en contact par enfichage avec le dispositif de chauffage CTP (4).

9. Chauffage de tube selon l'une des revendications précédentes, **caractérisé en ce que** l'élément de précontrainte de boîtier (44) est formé par un élément en tôle qui présente des ressorts en saillie (46), formés d'un seul tenant sur celui-ci par estampage et pliage, qui sont appliqués sous précontrainte contre l'élément de transmission de pression (32).

10. Chauffage de tube selon l'une des revendications précédentes, **caractérisé en ce que** l'élément de précontrainte de boîtier (44) et le contre-élément de boîtier (48) sont formés respectivement par un élément en tôle qui présente respectivement au moins un segment de verrouillage (50) formé d'une seule pièce sur celui-ci par estampage et/ou pliage, par lequel l'élément de précontrainte de boîtier (44) et le contre-élément de boîtier (48) sont maintenus l'un contre l'autre par complémentarité de forme.
